Europäisches Patentamt

**European Patent Office**

**Office européen des brevets**

(19)

(11) Publication number: **0 164 442**

**A1**

(12) **EUROPEAN PATENT APPLICATION**

(21) Application number: **84112956.2**

(22) Date of filing: **26.10.84**

(51) Int. Cl.⁴: **G 01 F 1/28**
**A 01 J 7/00, G 01 F 1/52**

(30) Priority: **27.08.84 IL 72780**
**30.10.83 IL 70089**
**10.02.84 IL 70923**

(43) Date of publication of application:
**18.12.85 Bulletin 85/51**

(84) Designated Contracting States:
**AT BE CH DE FR GB IT LI LU NL SE**

(71) Applicant: **Haliva, Diuk Ziud**
**Kibbutz Mahanaim**
**D.N. Korazim 12 315(IL)**

(72) Inventor: **Zur, Yoel**
**Kibbutz Mahanaim**
**D.N. Korazim 12 315(IL)**

(74) Representative: **Kraus, Walter, Dr. et al,**
**Patentanwälte Kraus Weisert & Partner**
**Thomas-Wimmer-Ring 15**
**D-8000 München 22(DE)**

(54) Apparatus for measuring the flow of a liquid.

(57) Apparatus for measuring the flow of a liquid including a liquid receiving container including a liquid inlet and a liquid outlet, force transducer apparatus including sensor apparatus disposed in the container between the liquid inlet and the liquid outlet and arranged to provide an output indication of the weight of liquid flowing thereonto at a measuring time, and apparatus for computing a total weight of liquid flow in response to the output indication.

FIG. I

Croydon Printing Company Ltd.

## FIELD OF THE INVENTION

The present invention relates to apparatus for liquid 0164442 measurement in general and, in particular, to apparatus for milk flow measurement.

## BACKGROUND CF THE INVENTION

In present-day mechanized and automated animal husbandry, a need has been reccgnized for accurate record keeping of the output of a dairy herd and sensing of the milk flow of individual cows. Sensing of the milk flow is important for the automatic termination of vacuum milking operations as well as timing of the automatic detachment of the milking apparatus from the cow. It is also important for monitcring the milk production of each individual cow over time.

Milk flow sensors which sense the drop off in milk flow, indicating a termination of milking, are known. One example is a milking controller manufactured by Alfa-Laval of Sweden. This device does not measure the total amount of milk flow.

One example of apparatus for milk flow measurement is described in Form No. 9P-304 (Catalog) of DEC Dairy Equipment Co. of Madison, Wisconsin, U.S.A. and is known as the Bou-matic System 2000. The metering system included therein is a complex one, incorporating rotating chambers whose passage is sensed by a photoelectric sensor.

Another example of apparatus for milk flow measurement is disclosed in a catalog of Afikim Agricultural Equipment of Kibbutz Afikim, Israel. This apparatus also employs a mechanical metering chamber.

1

Both devices described above suffer from the disadvantage that they incorporate mechanically operative components which are liable to wear, breakdown and inaccuracy due to improper mechanical operation. Furthermore, since these devices count units of a specific volume, the accuracy of their measurements depends upon the volume of the metering chamber.

There is disclosed in applicant's earlier Israel Patent 58203 filed September 7, 1979, milk flow measuring apparatus including a debubbling means for removing bubbles from milk received therein and measuring apparatus including a container disposed within the debubbling means wherein the rate of outflow through the measuring means is a predetermined function of the amount of milk contained therein. The height of the milk column is measured to indicate total flow. While the device disclosed therein is eminently suitable for its purpose, the present invention seeks to provide an alternative solution to milk flow measurement based on different principles.

## SUMMARY OF THE INVENTION

It is therefore an object of the present invention to provide a milk flow measuring device which is accurate and relatively inexpensive and which is particularly suitable for use with central collection milking systems in which collection bottles are not present. The device produced in accordance with the present invention is particularly suitable for providing an electrical output to display or recording apparatus or other electrically controlled apparatus.

There is thus provided in accordance with an embodiment of the present invention apparatus for measuring the flow of a liquid including a liquid receiving container including a liquid inlet and a liquid outlet, force transducer apparatus including sensor apparatus disposed in the container between the liquid inlet and the liquid outlet and arranged to provide an output indication of the weight of liquid flowing thereonto at a measuring time, and apparatus for computing a total weight of liquid flow in response to the output indication.

According to a preferred embodiment, the liquid receiving container includes a first enclosure communicating with the liquid inlet and a second enclosure communicating with the first enclosure and with the liquid outlet; and the force transducer apparatus includes load sensor apparatus mounted in the flow path between the first enclosure and the second enclosure whereby all the liquid flowing from the liquid inlet to the liquid outlet flows onto the load sensor apparatus, and a force transducer coupled to the load sensor means and operative to provide an output indication of the weight of liquid flowing onto the sensor.

Further in accordance with the present invention, there is also provided recording and display apparatus for indicating and recording the quantity of liquid production.

Additionally in accordance with the present invention, there is provided apparatus for measuring the flow of milk from a cow including a milk receiving container including a milk inlet and a milk outlet, force transducer apparatus including sensor apparatus disposed in the container between the milk inlet

3

and the milk outlet and arranged to provide an output indication of the weight of milk flowing thereonto at a measuring time, and apparatus for computing a total weight of milk flow in response to the output indication.

According to a preferred embodiment, the milk receiving container includes a first enclosure communicating with the milk inlet and a second enclosure communicating with the first enclosure and with the milk outlet; and the force transducer apparatus includes load sensor apparatus mounted in the flow path between the first enclosure and the second enclosure whereby all the milk flowing from the milk inlet to the milk outlet flows ontothe load sensor apparatus, and a force transducer coupled to the load sensor means and operative to provide an output indication of the weight of milk flowing onto the sensor.

In accordance with a preferred embodiment of the invention, the load sensor apparatus includes a sensor plate disposed in the flow path between the first enclosure and the second enclosure.

In accordance with an alternate embodiment, the load sensor apparatus includes an essentially spherical sensor, preferably plastic or rubber, disposed in the flow path between the first enclosure and the second enclosure.

In accordance with an alternate embodiment, the sensor comprises cup apparatus defining an outlet slit which is arranged such that the rate of milk outflow therethrough is a predetermined function of the milk level in the cup apparatus.

## BRIEF DESCRIPTION OF THE DRAWINGS          0164442

The apparatus of the present invention will be further understood and appreciated from the following detailed description taken in conjunction with the drawings in which:

Fig. 1 is an illustration of milk measurement apparatus constructed and operative in accordance with an embodiment of the present invention;

Fig. 2 is an illustration of milk measurement apparatus constructed and operative in accordance with an alternate embodiment of the present invention;

Fig. 3 is an illustration of milk measurement apparatus constructed and operative in accordance with another alternate embodiment of the present invention; and

Fig. 4 is an illustration of milk measurement apparatus constructed and operative in accordance with another alternate embodiment of the present invention.

## DETAILED DESCRIPTION OF THE INVENTION

The present invention will be described hereinbelow with particular reference to apparatus for measurement of milk flow from cows. However, it will be appreciated that the scope of the invention is not necessarily limited to milk flow measurement apparatus and techniques. Rather, the scope of the invention is broad enough to encompass the measurement of the flow of various liquids. The reference in the example which is described hereinbelow to milk flow measurement is for the purposes of

016444

illustration only.

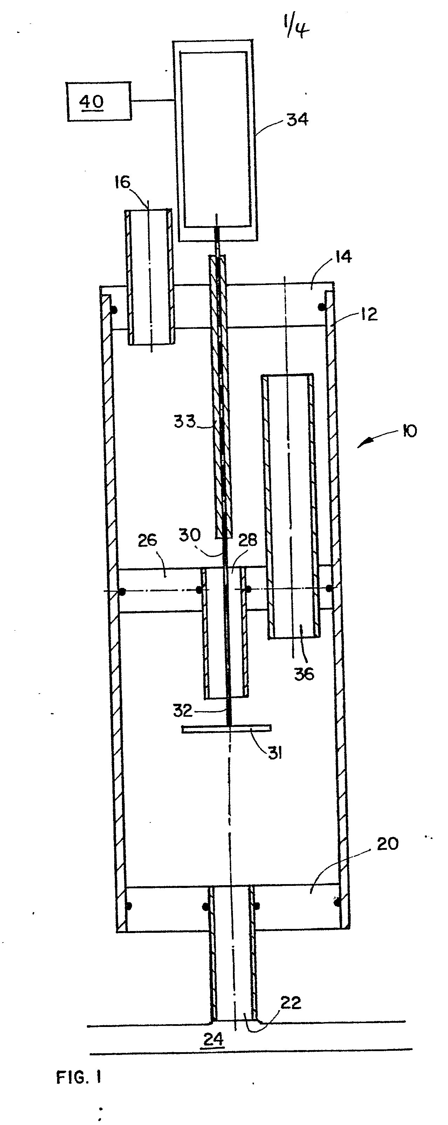

With reference to Fig. 1 there is shown apparatus for measuring milk flow constructed and operative in accordance with an embodiment of the present invention. The apparatus comprises a milk receiving container 10, typically formed of a cylindrical section of transparent plastic material 12. Alternatively, container 10 may be constructed of metal or any other suitable material. A top member 14 is joined to the top of container 10 and is formed with a milk inlet 16 entending therethrough and communicating with the interior of container 10. Milk inlet 16 is coupled to the source of milk to be measured, generally an individual cow, as by a conventional vacuum cluster (not shown).

It is a particular feature of the present invention that the milk measurement apparatus is operative at positive pressure, atmospheric pressure or vacuum, as desired. Container 10 is further provided with a bottom member 20 which is formed with a milk outlet 22 communicating with the interior of the lower portion of container 10. Container 10 may be mounted in an upstanding orientation with outlet 22 communicating with a milk flow line 24 to permit measurement of flow from each of a plurality of milking stations to the central milk collector.

Mounted within container 10 is a central support member 26 which divides container 10 into upper and lower portions. Central support member 26 is formed with an aperture 28 communicating with the upper and lower portions of container 10. Mounted within aperture 28 is a load sensor 30. Load sensor 30, as illustrated, comprises a sensor plate or disk 31 affixed to a rod or wire 32. Rod 32 passes through a low friction collar

6

element 33 passing through top member 14 and is coupled to a force transducer 34. Collar element 33 is provided to prevent the free passage of air into container 10 through top member 14.

Force transducer means 34 may be any conventional transducer which is capable of converting the forces created by the liquid flowing onto load sensor 30 into a related change of an electrical property of the transducer and providing an output indication corresponding thereto. Any strain gauge or load cell, such as the Super-Mini Load Cells Model SM-25 and Model SM-1000 manufactured by Interface, Inc., may be utilized. Alternatively, any other conventional load sensor and/or force transducer may be employed.

A connecting element 36 communicates with both the upper and lower portions of container 10. Connecting element 36 serves to maintain equal ambient air pressure in the upper and lower portions. It will be appreciated that, due to the equal pressure throughout the container, the only force acting on the liquid causing it to flow from the inlet to the outlet is gravity. Thus, it is only the weight of the liquid which will be measured by the load sensor.

It is noted that the upper and lower portions of the container 10 never become filled with liquid. Therefore the only pressure operating on the liquid is air pressure and all of the liquid passes by gravitational force through aperture 28 and impinges on sensor 31.

It is a particular feature of the present invention that force transducer apparatus including a load sensor and a

7

force transducer is employed to provide the output indication of the weight of liquid flow. This provides a measurement system requiring little maintenance, which is easy to clean and which can easily be repaired in the event of damage.

It is a further particular feature of the invention that accurate measurement is provided of the volume of liquid flow even without a flow through the entire cross section of the measuring apparatus.

According to a further preferred embodiment, force transducer 34 is electrically coupled to computing circuitry 40 which is capable of providing a sensible indication of the total amount of milk received from the cow. Computing circuitry 40 may additionally include recording circuitry and/or display circuitry for recording or displaying such information. Suitable computing circuitry is differential amplifiers and microprocessors. A seven segment LED display is suitable display apparatus.

The operation of the apparatus of Fig. 1 is as follows. The milking operation is begun, and milk begins to flow into container 10 via inlet 16. The milk impinges on central support member 26 and is directed towards aperture 28 through which the milk pours due to the effect of gravity. As the milk flows through aperture 28, it impinges on sensor plate 31 of load sensor 30. Force transducer 34, coupled to the load sensor 30, operates to provide an output indication corresponding to the load sensed by sensor 30 over time.

The output indication of force transducer 34 is integrated by computing circuitry 40 which provides an indication of the total amount of milk received from the cow. If

8

desired, the information is displayed on display circuitry and it may be recorded on recording circuitry.

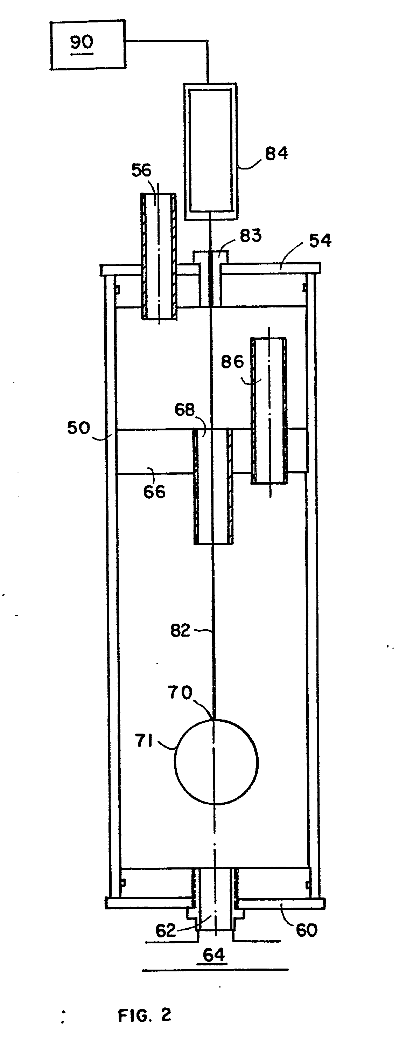

Turning now to Fig. 2, there is shown apparatus for measuring milk flow constructed and operative in accordance with an alternate embodiment of the present invention. The embodiment of Fig. 2 is substantially identical to that of Fig. 1 with the exception of the load sensor mechanism. The apparatus comprises a milk receiving container 50 defining a top member 54 joined to the top of container 50 and formed with a milk inlet 56 entending therethrough and communicating with the interior of container 50. Milk inlet 56 is coupled to the source of milk to be measured.

Container 50 is further provided with a bottom member 60 which is formed with a milk outlet 62 communicating with the interior of the lower portion of container 50. Container 50 may be mounted in an upstanding orientation with outlet 62 communicating with a milk flow line 64 to permit measurement of flow from each of a plurality of milking stations to the central milk collector.

Mounted within container 50 is a central support member 66 which divides container 50 into upper and lower portions. Central support member 66 is formed with an aperture 68 communicating with the upper and lower portions of container 50. Mounted within aperture 68 is a load sensor 70. Load sensor 70 comprises a sensor ball 71 suspended from a flexible thread support 82. Sensor ball 71 is preferably an essentially spherical sensor on which the milk or other fluid impinges when flowing from the inlet to the outlet. Sensor ball 71 may be formed of

9

plastic, rubber, or any other material compatible with the fluid flowing through the container.

Thread 82 is a flexible thread or very thin strip of stainless steel supporting sensor 71. It is a particular feature of this embodiment of the invention that the sensor means comprises a spherical sensor suspended by a flexible thread. The round shape permits the fluid to flow more uniformly over the sensor and provides a more precise load measurement than many flat sensors.

Flexible thread 82 passes through a teflon sleeve element 83 mounted in top member 54 and is coupled to a force transducer 84 such as described above with reference to Fig. 1. Sleeve element 83 is provided to prevent the free passage of air into container 50 through top member 54, although, it will be appreciated, a small amount of air is permitted to flow therethrough, and preferably comprises a low friction material, such as teflon.

A connecting element 86 communicates with both the upper and lower portions of container 10. Connecting element 86 serves to maintain equal air pressure or vacuum in the upper and lower portions. Similarly to Fig. 1, due to the equal pressure throughout the container, the only force acting on the liquid causing it to flow from the inlet to the outlet is gravity. Thus, it is only the weight of the liquid which will be measured by the load sensor.

According to a further preferred embodiment, force transducer 84 is electrically coupled to computing circuitry 90 which is capable of providing a sensible indication of the total amount of milk received from the cow. Computing circuitry 90 may additionally include recording circuitry and/or display circuitry for recording or displaying such information. Suitable computing circuitry is differential amplifiers and microprocessors. A seven segment LED display is suitable display apparatus.

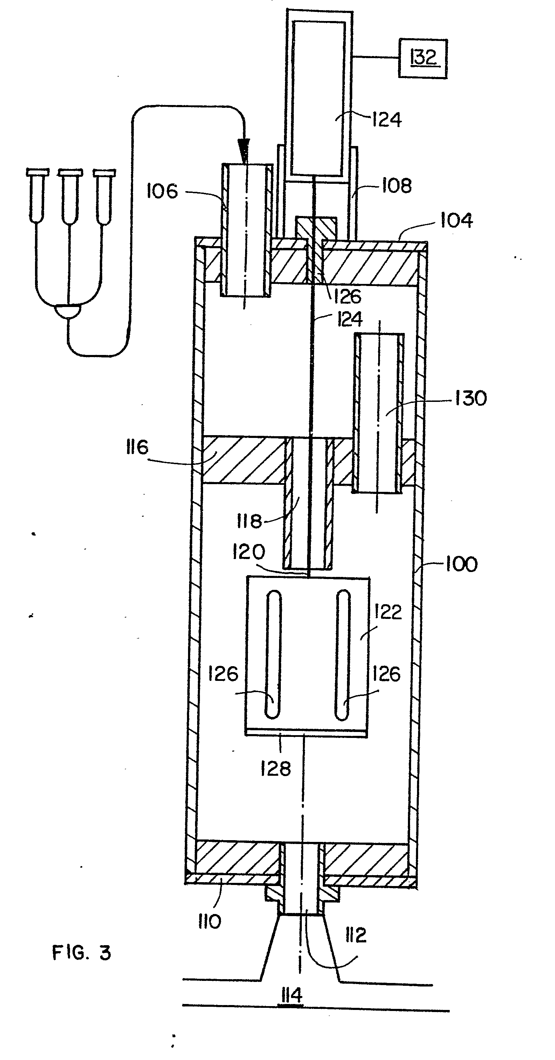

Turning now to Fig. 3, there is shown apparatus for measuring milk flow constructed and operative in accordance with an alternate embodiment of the present invention. The embodiment of Fig. 3 is substantially identical to that of Fig. 1 with the exception of the load sensor mechanism. The apparatus comprises a milk receiving container 100 defining a top member 104 joined to the top of container 100 and formed with a milk inlet 106 entending therethrough and communicating with the interior of container 100. Milk inlet 106 is coupled to the source of milk to be measured. A guide member 108 may be provided on top member 104 to support the load measuring apparatus described hereinbelow.

Container 100 is further provided with a bottom member 110 which is formed with a milk outlet 112 communicating with the interior of the lower portion of container 100. Container 100 may be mounted in an upstanding orientation with outlet 112 which may be coupled to a milk flow line 114 to permit measurement of flow from each of a plurality of milking stations to the central milk collector.

Mounted within container 100 is a central support member 116 which divides container 100 into upper and lower portions. Central support member 116 is formed with an aperture 118 communicating with the upper and lower portions of container 100. Mounted within aperture 118 is a load sensor 122. 0164442

Load sensor 122 comprises a liquid retaining member or cup suspended from a support 124. Support 124 may comprise a flexible thread or rigid stainless steel ribbon, or any other support means coupling it to the force transducer. Cup 122 defines a bottom element 128, and at least one and preferably a plurality of vertical grooves 126 in its peripheral wall. Cup 122 may be formed of plastic, rubber, or any other material compatible with the fluid flowing through the container. Thread 132 preferably comprises a flexible thread or very thin strip of stainless steel supporting sensor cup 122.

It is a particular feature of this embodiment of the invention that the sensor means comprises fluid retaining means with a restricted outlet, the outflow through which depends on the height of the liquid collected therein. Milk or other liquid to be measured impinges on bottom element 128 and is retained within cup 122 until it flows out via grooves 126. The configuration of the grooves determines the rate of outflow of the milk. The rate of outflow is a function of the height of milk in the cup which is, in turn, a function of the rate of inflow into the cup. Thus, both the weight of the liquid as it impinges on the bottom element and the weight of the liquid as it is retained in the cup are measured. This provides a more precise load measurement due to the amplication of the sensed weight than many flat sensors and permits a more accurate determination of the rate and volume of fluid flow.

Thread 124 passes through a frictionless sleeve element 126, preferably teflon, mounted in top member 104 and is coupled

12

to a force transducer 124 such as described above with reference to Fig. 1. Sleeve element 126 is provided to prevent the free passage of air into container 100 through top member 104, although it is acceptable for a small amount of air to flow therethrough, and preferably comprises a low friction material, such as teflon.

As with the earlier described embodiments, force transducer 124 is preferably electrically coupled to computing circuitry 132 which is capable of providing a sensible indication of the total amount of milk received from the cow. The computing circuitry may additionally include recording circuitry and/or display circuitry for recording or displaying such information. Suitable computing circuitry is differential amplifiers and microprocessors. Alternatively, the electrical output of the transducer may be provided to a central computer or data processor. A seven segment LED display is suitable display apparatus.

It is noted that the upper and lower portions of the container 100 never become filled with liquid. Therefore the only pressure operating on the liquid is air pressure. A connecting element 130 communicates with both the upper and lower portions of container 100. Connecting element 130 serves to maintain equal air pressure or vacuum in the upper and lower portions. Due to the equal pressure throughout the container, the only force acting on the liquid causing it to flow from the inlet to the outlet is gravity, and all of the liquid passes by gravitational force through aperture 118 and impinges on sensor 120.

13

It is a particular feature of the embodiment of Fig. 3 that as much as ten times the force of liquid flow can be measured in the device as in those of Figs. 1 and 2 and at greater accuracy. This is primarily due to the fact that measurement of both impingement and weight of retention permit the force transducer to operate in the middle of its range, rather than at one end thereof, resulting in a greater signal to noise ratio. Furthermore, a smaller amplifier or no amplifier at all is required for analysis of the output of the force transducer.

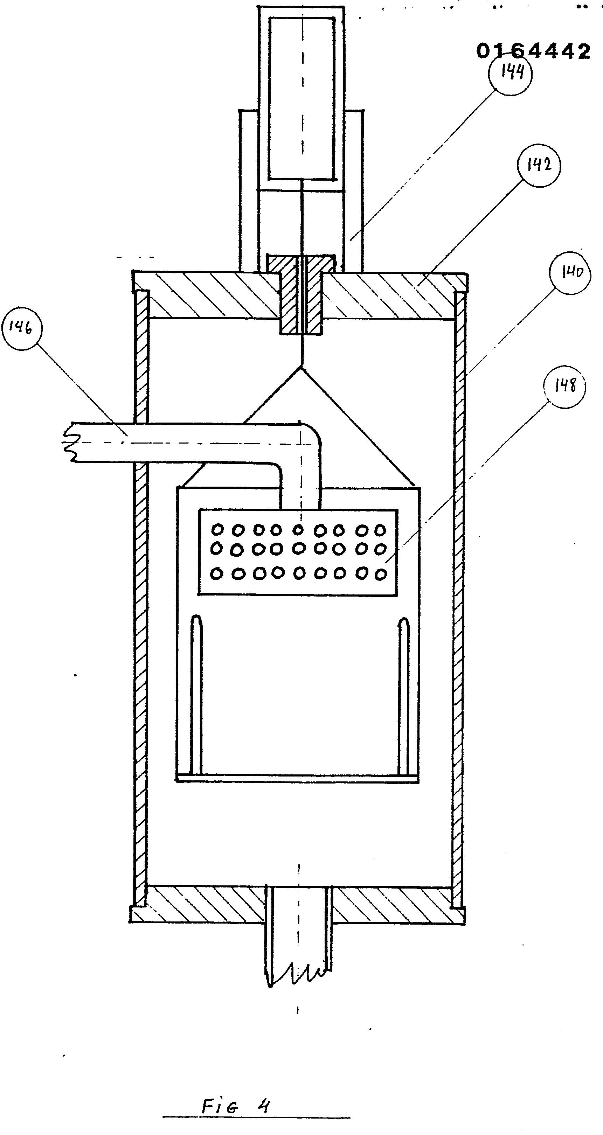

It is a particular feature of the present invention that uniform pressure or vacuum is maintained throughout the milk receiving and measuring chamber. In the embodiments of Figs. 1 to 3, this is accomplished by means of the connecting element between first and second portions of the container. Alternatively, this uniformity of pressure may be maintained in any of a variety of manners. One example is shown in Fig. 4.

In Fig. 4 there is shown apparatus for measuring milk flow constructed and operative in accordance with an alternate embodiment of the present invention. The apparatus comprises a milk receiving container 140 defining a top member 142 joined to the top of container 140 and formed with a load sensor support 144. A milk inlet 146 entends through the peripheral wall of container 140 and communicates with the interior thereof.

One end of milk inlet 146 is coupled to the source of milk to be measured. The other end thereof is coupled to means for slowing down or damping the liquid flow 148, such as a perforated cup member or a funnel shaped member. As can be seen from Fig. 4, there are no separate upper and lower compartments, no partition or connecting member required in the illustrated embodiment, yet uniform pressure is maintained throughout the container 140.

The bottom portion of container 140 is substantially identical to that of the embodiment of Fig. 3, as is the load sensor. It will be appreciated that any suitable load sensor can be utilized in this embodiment, particularly, but not limited to, a plate, ball or cup sensor as described hereinabove, which is suspended by a flexible thread or other suitable means from the force transducer.

It will be appreciated by those skilled in the art that the invention is not limited to what has been shown and described hereinabove. Rather, the scope of the invention is limited solely by the claims which follow.

15

CLAIMS

0164442

1.      Apparatus for measuring the flow of a liquid comprising:

a liquid receiving container comprising a liquid inlet and a liquid outlet;

force transducer means comprising load sensor means disposed in said container between said liquid inlet and said liquid outlet and arranged for impingement thereon of the liquid flow and to provide an output indication in response thereto; and

means for computing a total liquid flow in response to the output indication.

2.      Apparatus according to claim 1 and wherein said weight sensor means comprises means on which said liquid flow impinges but is not substantially retained.

3.      Apparatus according to claim 1 and wherein said weight sensor means comprises means for temporarily retaining said liquid flow and permitting outflow therefrom at a rate which is a function of the amount of liquid therein.

4.      Apparatus according to claim 1 and wherein:

said liquid receiving container comprises:

a first enclosure communicating with said liquid inlet; and

a second enclosure communicating with said first enclosure and with said liquid outlet.

5.      Apparatus according to claim 4 and wherein said first

16

and second enclosures are at equal pressure.

6.       Apparatus according to claim 4 and wherein said first enclosure comprises a flow damping member.

7.       Apparatus according to claim 1  and wherein said load sensor means comprises a sensor plate disposed in the flow path between said liquid inlet and said liquid outlet.

8.       Apparatus according to claim 1 and wherein said load sensor means defines a generally spherical impingement surface disposed in the flow path between said liquid inlet and said liquid outlet.

9.       Apparatus according to claim 1 and wherein said load sensor means comprises a liquid retaining member defining at least one outlet groove in its peripheral wall, the outlet groove being arranged such that the rate of milk outflow therethrough is a predetermined function of the milk level in the liquid retaining member.

10.      Apparatus according to claim 9 and wherein said at least one groove comprises a plurality of grooves.

11.      Apparatus according to claim 9 and wherein said at least one groove comprises a generally vertical groove.

12.      Apparatus according to claim 1 and further comprising display means coupled to said computing means for providing a sensible indication of said total weight.

13.      Apparatus according to claim 1 and further comprising

17

recording means coupled to said computing means for recording said total weight.

14.     Apparatus for measuring the flow of a liquid comprising:

a liquid receiving container comprising a liquid inlet and a liquid outlet;

force transducer means comprising sensor means disposed in said container between said liquid inlet and said liquid outlet and arranged to provide an output indication of the weight of liquid flowing thereonto at a measuring time; and

means for computing a total weight of liquid flow in response to the output indication.

15.     Apparatus for measuring the flow of milk from a cow comprising:

a milk receiving container comprising a milk inlet and a milk outlet;

force transducer means comprising sensor means disposed in said container between said milk inlet and said milk outlet and arranged to provide an output indication of the weight of milk flowing thereonto at a measuring time; and

means for computing the total weight of milk flow in response to the output indication.

16.     Apparatus according to claim 15 and wherein:

said milk receiving container comprises:

a first enclosure communicating with said milk inlet; and

asecond enclosure communicating with said first 0164442
enclosure and with said milk outlet; and

said force transducer means comprises:

load sensor means mounted in the flow path between the first enclosure and the second enclosure whereby all the milk flowing from said milk inlet to said milk outlet flows onto said load sensor means; and

a force transducer coupled to said load sensor means and operative to provide an output indication of the weight of milk flowing onto said sensor.

1/4

0164442

FIG. 1

FIG. 2

0164442

FIG. 3

0164442

FiG 4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 824 910 (VYZKUMNY USTAV ZEMEDELSKE TECHNIKY) * Figure; claim 1; page 5, paragraph 1; page 5, paragraph 3; page 7, paragraph 1 * | 1-6,9-16 | G 01 F 1/28 A 01 J 7/00 G 01 F 1/52 |
| A | EP-A-0 016 302 (SIEMENS AG) * Figure * | 1,7,8 | |
| A | DE-A-2 603 522 (GERDTS KG) * Figure * | 1-3,14 | |

TECHNICAL FIELDS SEARCHED (Int. Cl.4)

A 01 J
G 01 F

The present search report has been drawn up for all claims

| Place of search | Date of completion of the search | Examiner |
|---|---|---|
| THE HAGUE | 11-09-1985 | NUIJTEN E.M. |